# EUROPEAN PATENT APPLICATION

(11) **EP 3 561 570 A1**
(43) Date of publication of application: **30.10.2019**
(21) Application number: 16924452.2
(22) Date of filing: 22.12.2016
(51) Int. Cl.: G02B 27/01

(54) **HEAD-MOUNTED DISPLAY APPARATUS, AND VISUAL-AID PROVIDING METHOD THEREOF**

(71) Applicant: Shenzhen Royole Technologies Co., Ltd., Shenzhen, Guangdong 518052 (CN)
(72) Inventor: ZHAO, Cong, Shenzhen Guangdong 518052 (CN)
(74) Representative: Hamer, Christopher K.
(86) International application number: PCT/CN2016/111510
(87) International publication number: WO 2018/112838

(57) **Abstract**

A head mounted display device (100) comprises a display apparatus (1), a camera apparatus (2) and a motion sensor (3). A visual aiding method is also disclosed. The method comprises: when the motion sensor detects that the head mounted display device moves downward relative to a reference position to reach a first preset angle, the camera apparatus is controlled to be turn on to capture image, and the display apparatus is controlled to display an area of the captured image corresponding to a movement angle according to the movement angle detected by the motion sensor. The head mounted display device and the visual aiding method can provide visual aid by means of the camera apparatus.

## Description

### TECHNICAL FIELD

The present disclosure relates to a display device, and in particular, to a head mounted display device and a visual aiding method thereof.

### BACKGROUND

At present, the head mounted display device has been gradually popularized by people for its convenience, stereoscopic display and stereo effects. In recent years, with the advent of virtual reality (VR) technology, the head mounted display device has become more widely used as a hardware support device for VR technology. Since the user cannot see outside environment after wearing the head mounted display device, it is often necessary to remove the head mounted display device to see the outside environment. For example, when the user needs to use an external input apparatus, the user needs to remove a helmet to confirm a position of the external input apparatus. If the external input apparatus has buttons, the user may need to remove the head mounted display device to see a position of a button to be operated, and then wear the head mounted display device to see the content displayed on the head mounted display device, which brings inconvenience to the user input.

### SUMMARY

The embodiments of the present disclosure disclose a head mounted display device and a visual aiding method thereof, which can aid the user to view external environment and facilitate the user to operate when the user wears the head mounted display device.

The head mounted display device disclosed by embodiments of the present disclosure includes a display apparatus and a processor. The head mounted display device further includes: a camera apparatus, for capturing an image around the head mounted display device; and a motion sensor, for detecting a movement angle of the head mounted display device relative to a reference position; the processor is coupled to the display apparatus, the camera apparatus, and the motion sensor, and the processor is configured to control to turn on the camera apparatus to capture image when the motion sensor detects that the head mounted display device moves downward relative to the the reference position to reach a first preset angle; the processor is further configured to control the display apparatus to display an area of the captured image corresponding to a movement angle according to the movement angle detected by the motion sensor.

The visual aiding method disclosed by embodiments of the present disclosure is applied to a head mounted display device. The head mounted display device includes a display apparatus, a camera apparatus and a motion sensor. The visual aiding method includes: the camera apparatus is controlled to turn on to capture image when the motion sensor detects that the head mounted display device moves downward relative to a reference position to reach a first preset angle; the display apparatus is controlled to display an area of the captured image corresponding to a movement angle according to the movement angle detected by the motion sensor.

The head mounted display device and the visual aiding method thereof of the present disclosure can turn on the camera apparatus to capture image when the head mounted display device moves downward relative to the reference position to reach the first preset angle, and display a corresponding area of the captured image according to the movement angle, which can aid the user wearing the head mounted display device to observe the external environment, and can further display a process of viewing field gradation according to the change of the area of the displayed image.

### BRIEF DESCRIPTION OF THE ACCOMPANYING DRAWINGS

In order to illustrate the technical solutions in the embodiments of the present disclosure more clearly, the drawings to be used in the embodiments will be briefly described below. It is obvious that the drawings in the following description are only some embodiments of the present disclosure. Those skilled in the art can also obtain other drawings based on these drawings without paying any creative work.
FIG. 1 is a schematic diagram of a head mounted display device according to one embodiment of the present disclosure.
FIG. 2 is a block diagram of a head mounted display device according to one embodiment of the present disclosure;
FIG. 3 to FIG. 6 are diagrams showing an example of a specific displaying process of the display apparatus of the head mounted display device in accordance with a movement angle according to a first embodiment.
FIG. 7 is a schematic diagram of a display apparatus of a head mounted display device displaying a complete image according to one embodiment of the present disclosure.
FIG. 8 is a schematic diagram of the display apparatus of the head mounted display device displaying in a movement angle according to a second embodiment of the present disclosure.
FIG. 9 is a flowchart of a visual aiding method according to one embodiment of the present disclosure.
FIG. 10 is a sub-flow diagram of step S902 of FIG. 9.

### DETAILED DESCRIPTION OF ILLUSTRATED EMBODIMENTS

The technical solutions in the embodiments of the present disclosure are clearly and completely described in the following with reference to the accompanying drawings in the embodiments of the present disclosure. It is obvious that the described embodiments are only a part of the embodiments of the present disclosure, and not all of the embodiments. All other embodiments obtained by those skilled in the art based on the embodiments of the present disclosure without creative efforts are within the scope of the present disclosure.

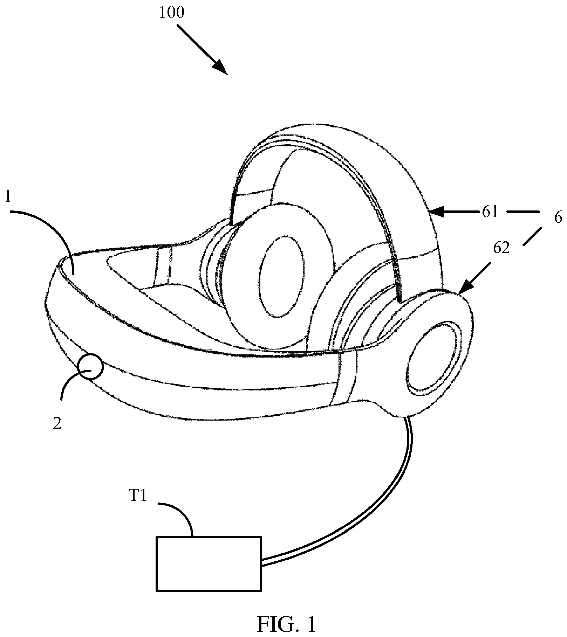

Referring to FIG. 1, a schematic diagram of a head mounted display device 100 is illustrated. As shown in FIG. 1, the head mounted display device 100 includes a display apparatus 1 and a camera apparatus 2. The display apparatus 1 is configured to output display image. The camera apparatus 2 is located on the display apparatus 1 for capturing an environment image around the head mounted display device 100. In some embodiments, as shown in FIG. 1, the camera apparatus 2 is located in front of the display apparatus 1 for capturing an image in front of the head mounted display device 100.

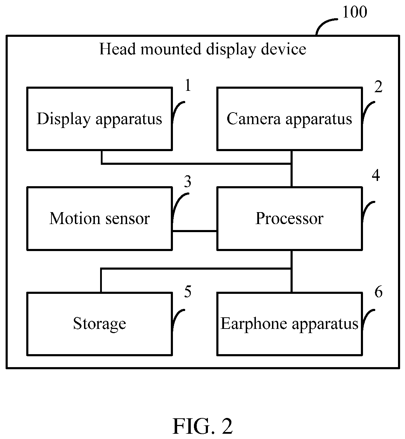

Please referring to FIG. 2, FIG. 2 is a structural block diagram of the head mounted display device 100. The head mounted display device 100 includes a motion sensor 3 and a processor 4 in addition to the display apparatus 1 and the camera apparatus 2.

The motion sensor 3 is located on an earphone apparatus 1 or the display apparatus 1for detecting a movement angle of the head mounted display device 100 relative to a reference position.

The processor 4 is coupled to the display apparatus 1, the camera apparatus 2, and the motion sensor 3. When the motion sensor 3 detects that the head mounted display device 100 moves downward relative to a reference position to reach a first preset angle, the processor 4 is configured to control to turn on the camera apparatus 2 to capture an image. The processor 4 controls the display apparatus 1 to display an area of the captured image corresponding to a movement angle detected by the motion sensor 3. In some embodiments, the motion sensor 3 detects a movement angle of the head mounted display device 100 relative to the reference position and generates a corresponding sensing signal. After the sensing signal is received, the processor 4 determines the movement angle of the head mounted display device 100 relative to the reference position determined by the motion sensor 3.

Therefore, the present disclosure can automatically turn on the camera apparatus 2 as a visual aid when the head mounted display device 100 moves downward relative to the reference position to reach the first preset angle, without removing the head mounted display device 100.

The processor 4 controls the display apparatus 1 to display a larger area of the image captured by the camera apparatus 2 when the movement angle detected by the motion sensor 3 becomes larger. The processor 4 controls the display apparatus 1 to display a smaller area of the captured image when the movement angle detected by the motion sensor 3 becomes smaller.

The reference position is a position where the head mounted display device 100 locates when the user wears the head mounted display device 100 and looks at straight ahead along the horizontal sight line.

In the first embodiment, the processor 4 controls the display apparatus 1 to display an area of the captured image corresponding to the movement angle according to the movement angle detected by the motion sensor 3, including: the processor 4 obtains images captured by the camera apparatus 2 at different movement angles during a process that the movement angle detected by the motion sensor 3 becomes larger or smaller, and intercepts an area corresponding to the movement angle in the image captured at a current movement angle, and controls the display apparatus 1 to display the area intercepted from the image.

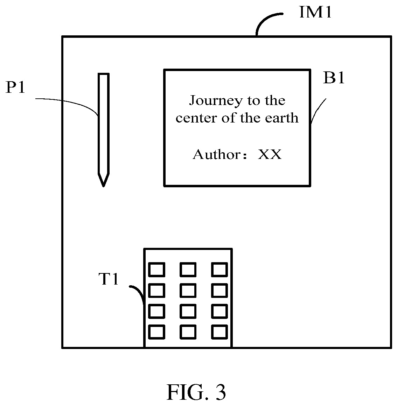

Please referring to FIG. 3 to FIG. 6, diagrams showing an example of a specific displaying process of the display apparatus 1 controlled by the processor 4 in the first embodiment are illustrated. FIG. 3 is a schematic diagram of the first image IM1 captured by the camera apparatus 2 at the first preset angle. That is, the first image IM1 shown in FIG. 3 is an image captured when the head mounted display device 100 moves downward relative to the reference position to reach the first preset angle.

As shown in FIG. 3, the first image IM1 currently captured by the camera apparatus 2 includes a part of a pen P1, a part of a book B1, and a part an input apparatus T1.

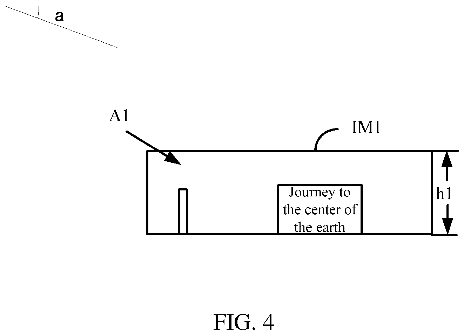

Please referring to FIG. 4, a schematic diagram of a partial area of the first image IM1 displayed by the display apparatus 1 is illustrated. The processor 4 obtains the first image IM1 captured by the camera apparatus 2 when the camera apparatus 2 is in the first preset angle, for example, angle a. As shown in FIG. 4, the processor 4 further controls the display apparatus 1 to display a partial area A1 in the first image IM1 currently captured by the camera apparatus 2 corresponding to the first preset angle.

The partial area A1 is an area intercepted from the first image IM1 extending from an upper side of the first image IM1 to down to reach a height h1.

The height of the first image IM1 is defined to be h. At this time, the display apparatus 1 displays an area of the h1/h ratio in the first image IM1.

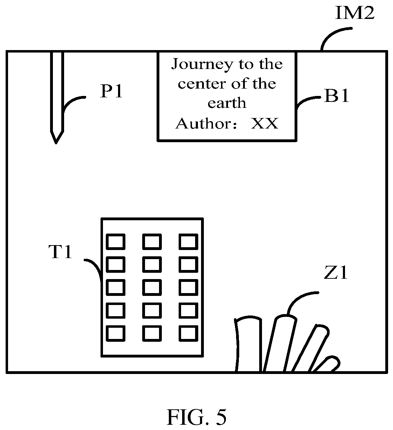

Please referring to FIG. 5, a schematic diagram of the second image IM2 captured by the camera apparatus 2 at a specific angle greater than the first preset angle, such as the angle b, is illustrated. That is, the second image IM2 shown in FIG. 5 is an image captured when the head mounted display device 100 moves downward relative to the reference position to reach the specific angle b.

As shown in FIG. 5, as the user's head moves downward, which drives the head mounted display device 100 and the camera apparatus 2 to move downward. When the head mounted display device 100 moves to the specific angle, the second image IM2 captured by the camera apparatus 2 changes to be an image as shown in FIG. 5.

As shown in FIG. 5, the second image IM2 currently captured by the camera apparatus 2 includes a lower half of the pen P1, a lower half of the book B1, all of the input apparatus T1, and a part of the hand Z1.

The processor 4 further obtains the second image IM2 captured by the camera apparatus 2 at the specific angle.

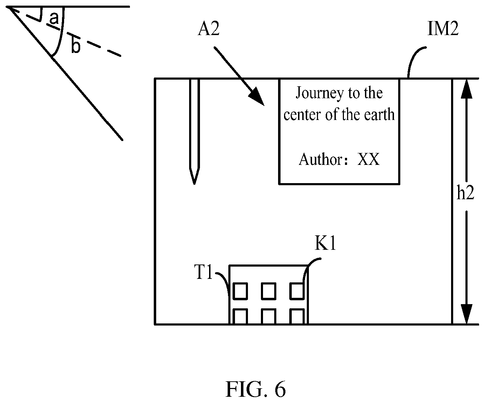

Please referring to FIG. 6, a schematic diagram of a partial area of the second image IM2 displayed by the display apparatus 1 is illustrated. As shown in FIG. 6, the processor 4 controls the display apparatus 1 to display a partial area A2 in the second image IM2 currently captured by the camera apparatus 2 corresponding to the specific angle .

The partial area A2 is an area intercepted by the processor 4 from the second image IM2 extending from an upper side of the second image IM2 to down to reach a height h2.

The height of the second image IM2 is defined to be h. At this time, the display apparatus 1 displays the area of the h2/h ratio in the second image IM2.

The ratio of the height h2 of the area A2 to the height h1 of the area A1 is equal to a ratio of the specific angle to the first preset angle. The first preset angle is defined to be a, the specific angle is b, then h1/h2=a/b, so h2=h1^{∗}b/a.

As shown in FIG. 2, the head mounted display device 100 further includes a storage 5. In some embodiments, the storage 5 prestores a mapping relationship between first preset angles and heights h1. When the head mounted display device 100 moves downward relative to the reference position to reach the first preset angle, the processor 4 determines a height h1 corresponding to the first preset angle according to the mapping relationship, and further intercepts an area from the first image IM1 extending from an upper side of the first image IM1 to down to reach the height h1, and further controls the display apparatus 1 to display the area intercepted from the first image IM1. When the head mounted display device 100 moves downward relative to the reference position to reach any specific angle b, the processor 4 can calculate the height h2 of the area A2 to be intercepted when the head mounted display device 100 moves downward relative to the reference position to reach the specific angle according to the formula h2=h1^{∗}b/a. The processor 4 takes the area intercepted from the second image IM2 extending from an upper side of the second image IM2 to down to reach the height h2 as the area A2, and controls the area A2 intercepted from the second image IM2 to be displayed.

In some embodiments, the storage 5 further stores a mapping relationship between a plurality of angles and heights, and the mapping relationship between the plurality of angles and heights include a mapping relationship between the first preset angle and the height h1, and a mapping relationship between other angles and heights. The processor 4 may determine a height corresponding to an angle currently reached when the head mounted display device 100 moves downward relative to the reference position, according to the correspondence relationship. The processor 4 intercepts an area from the current image extending from an upper side of the image to down to reach a corresponding height, and controls the area intercepted from the current image to be displayed.

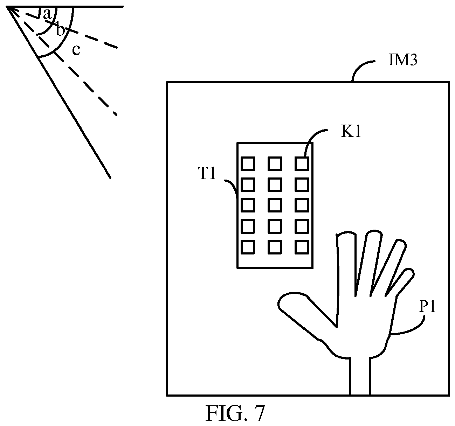

Referring to FIG. 7, in some embodiments, when the movement angle of the head mounted display device 100 moving downward relative to the reference position detected by the motion sensor 3 reaches a second preset angle c, the processor 4 controls the display apparatus 1 to display a complete image IM3 currently captured by the camera apparatus 2. The second preset angle is greater than the specific angle and the first preset angle. The specific angle is any angle between the first preset angle and the second preset angle.

In the above description, only a specific angle is taken as an illustration. Obviously, when the head mounted display device 100 moves downward relative to the reference position, the camera apparatus 2 captures image when it passes positions of a plurality of specific angles between the first preset angle and the second preset angle. The processor 4 calculates the height h2 of the area A2 to be intercepted when the head mounted display device 100 moves downward relative to the reference position to reach the specific angle b according to the formula h2=h1^{∗}b/a, and intercepts an area from the current image extending from an upper side of second image IM2 to down to reach a corresponding height, and further controls the display apparatus 1 to sequentially display areas each having the corresponding height in the image captured at each specific angle.

Therefore, as the user lowers his or hers head more, the image displayed by the display apparatus 1 gradually becomes larger, giving the user a feeling of gradually opening a viewing field.

As shown in FIG. 7, when the moving angle of the head mounted display device 100 moving downward reaches the second preset angle, at this time, the image screen IM3 displays the entire input apparatus T1 and hand Z1.

Therefore, the user does not need to remove the head mounted display device 100, and the relative position of the current hand and the input apparatus T1 can be obtained through the image captured by the camera apparatus 2, and the hand can move to the position of the input apparatus T1 to operate the input apparatus T1 for entering the corresponding content, which greatly facilitates the user's operations.

As shown in FIG. 6-7, in some embodiments, the input apparatus T1 may include physical or virtual buttons K1. When the user inputs through the input apparatus T1, the image captured by the camera apparatus 2 can clearly know the positions of the buttons K1, and the hand Z1 can move to the corresponding button K1 for operating.

When the user raises the head to drive the head mounted display device 100 upward, as described above, during the movement angle detected by the motion sensor 3 becomes smaller, the processor 4 obtains image captured by the camera apparatus 2 at different movement angles, and further intercepts a corresponding area from the image captured at the current movement angle.

The upward movement of the head mounted display device 100 is a reverse process of the head mounted display device 100. For example, when the movement angle becomes smaller to the specific angle b, at this time, the camera apparatus 2 currently captures the second image IM2 as shown in FIG. 5, and the processor 4 controls the display apparatus 1 to display a partial area A2 of the second image IM2 having a height h2 corresponding to the second preset angle as shown in FIG. 6. When the movement angle continues to decrease to the first preset angle, at this time, the camera apparatus 2 currently captures the first image IM1 as shown in FIG. 1, and the processor 4 controls the display apparatus 1 to display a partial area A1 of the first image IM1 having a height h1 corresponding to the first preset angle as shown in FIG. 4.

Therefore, as the user raises the head, the image displayed by the display apparatus 1 is gradually smaller, giving the user a feeling of gradually closing the viewing field.

In some embodiments, the processor 4 controls to turn off the camera apparatus 2 and/or control the display apparatus 1 to stop displaying the image when the moving angle of the head mounted display device 100 moving downward relative to the reference position detected by the motion sensor 3 is less than the first preset angle.

In other embodiments, the processor 4 controls the display apparatus 1 to display an area corresponding to the movement angle in the image according to the movement angle detected by the motion sensor 3, including: during a process that the movement angle detected by the motion sensor 3 becomes larger, the processor 4 obtains images captured by the camera apparatus 2 at different movement angles, and intercepts different areas from different image, and further controls the display apparatus 1 to display a splicing area of a current intercepted area and all previously intercepted areas; during a process that the movement angle detected by the motion sensor 3 becomes smaller, the processor 4 obtains images captured by the camera apparatus 2 at different movement angles, and intercepts an area corresponding to the movement angle from the image captured at the current movement angle, and controls the display apparatus 1 to display the area intercepted from the current image.

As described in the foregoing FIG. 3 and FIG. 4, when the head mounted display device 100 moves downward relative to the reference position to reach the first preset angle, the camera apparatus 2 captures the first image IM1. The first image IM1 currently captured by the camera apparatus 2 includes a part of the pen PI, the book B1, and the input apparatus T1.

As shown in FIG. 4, the processor 4 controls the display apparatus 1 to display a partial area A1 corresponding to the first preset angle in the first image IM1 currently captured by the camera apparatus 2. The partial area A1 is an area intercepted from the first image IM1 having a height h1 from the upper side of the first image IM1.

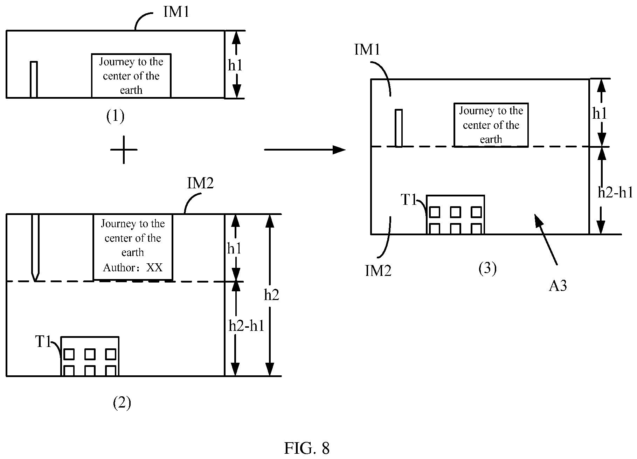

Referring to FIG. 8, in the second embodiment, when the head mounted display device 100 moves downward relative to the reference position to the specific angle b, the processor 4 controls the display apparatus 1 to display the area A3.

As described above, when the head mounted display device 100 moves to the specific angle b, the image captured by the camera apparatus 2 is the second image IM2 as shown in FIG. 5. The second image IM2 determined by the processor 4 according to h2=h1^{∗}b/a includes an area A2 having a height h2 from the upper side of the second image IM2.

The processor 4 further determines an overlapping area of the area A2 overlapping with the displayed area A1 when the head mounted display device 100 moves to reach the first preset angle as described in FIG. 4, and further removes a partial area of the area A2 located in the overlapped area, to obtain an area of h2-h1 as shown in (2) of FIG. 8.

The processor 4 superimposes the area A1 displayedas shown in (1) of FIG. 8 when the head mounted display device 10 moves to the first preset angle and the area A2 shown in (2) of FIG. 8 after removing the partial area of the area A2 overlapping with the area A1 to obtain a superimposed region A3 as shown in (3) of FIG. 8. Therein, a upper partial area of the superimposed area A3 is an area of the height h1 intercepted from the first image IM1, and a lower partial area of the superimposed area A3 is an area of the height h2-h1 intercepted from the second image IM2.

When the user raises the head to drive the head mounted display device 100 upward, the display of the display apparatus 1 controlled by the processor 4 is the same as that of the first embodiment, and is not described herein.

Obviously, when the head mounted display device 100 moves downward relative to the reference position to reach the second preset angle, the processor 4 also controls the current display apparatus 1 to display the currently obtained entire image.

As shown in FIG. 1, the head mounted display device 100 includes the input apparatus T1, and the input apparatus T1 is coupled to the display apparatus 1 and/or the earphone apparatus 6 by wire or wirelessly. The input apparatus T1 may be an input apparatus having physical buttons or may be an input apparatus such as a touch screen or a touch panel on which virtual keys are displayed.

In some embodiments, the input apparatus T1 can be an external apparatus that is adapted to the head mounted display device 100 and is not a part of the head mounted display device 100.

The camera apparatus 2 can be a camera, and the captured image can be a picture or a video image captured at a predetermined time or a preset movement angle. When it is the video image, the processor 4 may control the display apparatus 1 to display a partial area in the video image in real time after the movement angle is greater than or equal to the first preset angle; and changes a size of the partial area when the movement angle reaches a certain angle; and controls the display apparatus 1 to display a complete video image when the movement angle reaches the second preset angle.

FIGS. 3-8 are only exemplary figures, the user can view the external scene with the aiding of the camera apparatus 2, thereby finding the input apparatus T1 and other required objects, or implementing the function of talking with other people.

As shown in FIG. 1, the head mounted display device further includes an earphone apparatus 6 for outputting sound, and the earphone apparatus 6 may include an earphone loop 61 and two earphones 62, and the two earphones 62 are connected by the earphone loop 61.

The processor 4 can be a central processor, a microprocessor, a microcontroller, a single chip microcomputer, a digital signal processor, and the like. The storage 5 can be a flash card, a solid storage, a random storage, and the like.

The motion sensor 3 may be a gyroscope or an acceleration sensor or the like.

The head mounted display device 100 can be a head mounted display device such as a smart glasses or a smart helmet.

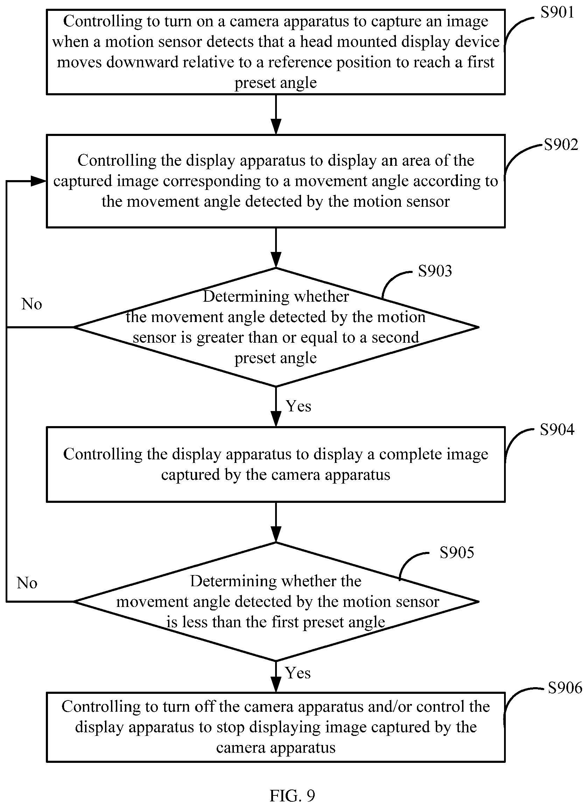

Please referring to FIG. 9, a flowchart of a visual aiding method according to one embodiment of the present disclosure is illustrated. This method is applied to the aforementioned head mounted display device 100. The method comprises the following steps:

The processor 4 controls to turn on the camera apparatus 2 to capture an image when the motion sensor 3 detects that the head mounted display device 100 moves downward relative to a reference position to reach a first preset angle (S901).

The processor 4 controls the display apparatus 1 to display an area of the captured image corresponding to a movement angle according to the movement angle detected by the motion sensor 3 (S902). Specifically, the processor 4 controls the display apparatus 1 to display a larger area of the image captured by the camera apparatus 2 when the movement angle detected by the motion sensor 3 becomes larger. The processor 4 controls the display apparatus 1 to display a smaller area of the captured image when the movement angle detected by the motion sensor 3 becomes smaller.

In some embodiments, the visual aiding method further comprises the steps of:

The processor 4 determines whether the movement angle detected by the motion sensor 3 is greater than or equal to a second preset angle (S903). If yes, the process goes to step S904, otherwise, the process goes back to step S902.

The display apparatus 1 is controlled to display complete image captured by the camera apparatus 2 (S904).

Obviously, in some embodiments, the step S903 and the step S904 may also be included in the step S902, then the step S902 includes displaying an complete image indicating that an area of the displayed image at this time is the entire image.

In some embodiments, the visual aiding method further includes the steps of:

The processor 4 determines whether the movement angle detected by the motion sensor 3 is less than the first preset angle (S905). If yes, the process goes to step S906, otherwise, the process goes back to step S902. The step S905 can also be performed before the step S903.

The processor 4 controls to turn off the camera apparatus 2 and/or control the display apparatus 1 to stop displaying image captured by the camera apparatus 2 (S906).

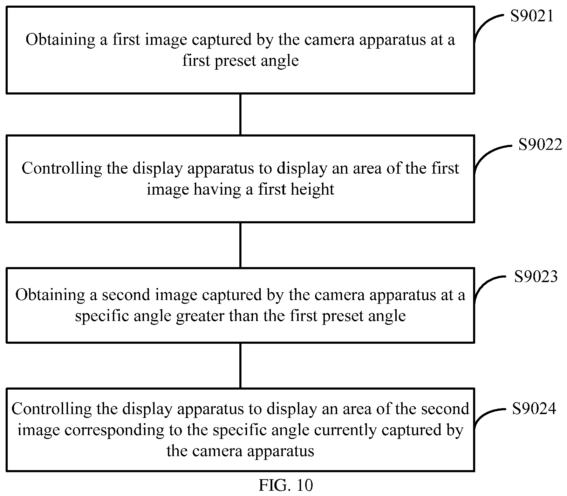

Referring to FIG. 10, it is a sub-flowchart of step S902 in FIG. 9 according to one embodiment of the present disclosure. As shown in FIG. 10, in an embodiment, the step S902 includes:

The processor 4 obtains a first image IM1 captured by camera apparatus 2 at the first preset angle (S9021).

The processor 4 controls the display apparatus 1 to display an area A1 of the first image IM1 having a first height h1 (S9022). In some embodiments, the storage 5 of the head mounted display device 100 prestores a mapping relationship between the first preset angles and the height h1. The processor 4 may determine the height h1 corresponding to the first preset angle according to the mapping relationship, and intercept an area from the first image IM1 extending from an upper side of the first image IM1 to down to reach the height h1 as the corresponding area A1, and control the area A1 intercepted from the first image IM1 to be displayed.

The processor 4 obtains a second image IM2 captured by the camera apparatus 2 at a specific angle b greater than the first preset angle (S9023).

The processor 4 controls the display apparatus 1 to display the area A2 corresponding to the specific angle b from the second image IM2 currently captured by the current camera apparatus 2 (S9024). In some embodiments, the processor 4 calculates a height h2 corresponding to a downward movement relative to the reference position to the specific angle b according to the formula h2=h1^{∗}b/a, and intercepts an area from the second image IM2 extending from the upper side of the second image IM2 to down to reach the height h2 as the corresponding area A2, and further controls the area A2 intercepted from the second image IM2 to be displayed. In other embodiments, the storage 5 of the head mounted display device 100 prestores a mapping relationship between a plurality of angles and heights, and the processor 4 determines the height h2 corresponding to the specific angle b according to the mapping relationship, and then intercepts the area from the second image IM2 extending from a upper side of the second image IM2 to down to reach the height h2 as the corresponding area A2, and controls the area A2 intercepted from the second image IM2 to be displayed.

In other embodiments, the step S902 includes: the processor 4 obtains image captured by the camera apparatus 2 at different movement angles during a process that the movement angle detected by the motion sensor 3 becomes larger; and intercepts different areas from different images; and controls the display apparatus 1 to display a splicing area of a current intercepted area and all previously intercepted areas; the processor 4 obtains images captured by the camera apparatus 2 at different movement angles during a process that the movement angle detected by the motion sensor 3 becomes smaller, and intercepts the area corresponding to the movement angle from the image captured at the current movement angle, and controls the display apparatus 1 to display the intercepted area.

Therefore, in the present disclosure, by using the camera apparatus 2 as a visual aiding device, it is possible to turn on when the user needs to look down for something to aid the user in finding an item such as an input apparatus.

The above is a preferred embodiment of the present disclosure, and it should be noted that those skilled in the art can also make several improvements and polishing without departing from the principles of the present disclosure is the scope of protection of the present disclosure.

## Claims

1. A head mounted display device, comprising a display apparatus and a processor, wherein the head mounted display device further comprises:
a camera apparatus, configured for capturing an image around the head mounted display device;
a motion sensor, configured for detecting a movement angle of the head mounted display device relative to a reference position;
the processor is coupled to the display apparatus, the camera apparatus and the motion sensor, and the processor is configured to control the camera apparatus to turn on to capture image when the motion sensor detects that the head mounted display device moves downward relative to the reference position to reach a first preset angle; and the processor is configured to control the display apparatus to display an area of the captured image corresponding to a movement angle according to the movement angle detected by the motion sensor.

2. The head mounted display device according to claim 1, wherein, the processor controls the display apparatus to display a larger area of the captured image when the movement angle detected by the motion sensor becomes larger; or the processor controls the display apparatus to display a smaller area of the captured image when the movement angle detected by the motion sensor becomes smaller.

3. The head mounted display device according to claim 2, wherein, the processor controls the display apparatus to display a complete image captured by the camera apparatus when the motion sensor detects that the movement angle is greater than or equal to a second preset angle.

4. The head mounted display device according to claim 1, wherein, the processor controls to turn off the camera apparatus, and/or, controls the display apparatus to stop displaying the image captured by the camera apparatus when the movement angle detected by the motion sensor is less than the first preset angle.

5. The head mounted display device according to any one of claims 1 to 4, wherein, during a process that the movement angle detected by the motion sensor becomes larger or smaller, the processor obtains images captured by the camera apparatus at different movement angles, and intercepts an area corresponding to the movement angle from the image captured at a current movement angle, and controls the display apparatus to display the area intercepted from the image.

6. The head mounted display device according to claim 5, wherein, the processor obtains images captured by the camera apparatus at different movement angles, and intercepts the area corresponding to the movement angle from the image captured at the current movement angle, and controls the display apparatus to display the area intercepted from the image, comprises:
the processor obtains a first image captured by the camera apparatus at the first preset angle, intercepts an area corresponding to the first preset angle from the first image, and controls the display apparatus to display the area intercepted from the first image;
the processor obtains a second image captured by the camera apparatus at a specific angle greater than the first preset angle, and intercepts an area corresponding to the specific angle from the second image, and controls the display apparatus to display the area intercepted from the second image.

7. The head mounted display device according to claim 6, wherein, the head mounted display device further comprises a storage, and the storage prestores a mapping relationship between first preset angles and first height; the processor intercepts the area corresponding to the first preset angle from the first image, and controls the display apparatus to display the area intercepted from the first image, comprises:
the processor determines a first height corresponding to the first preset angle according to the mapping relationship between the first preset angles and the first height, and intercepts an area from the first image extending from an upper side of the first image to down to reach the first height, and controls the area intercepted from the first image to be displayed.

8. The head mounted display device according to claim 7, wherein, the processor intercepts the area corresponding to the specific angle from the second image, and controls the display apparatus to display the intercepted area, comprises:
the processor calculates a second height corresponding to the specific angle according to a formula h2=h1^{∗}b/a when the head mounted display device moves downward relative to the reference position to the specific angle, and intercepts an area from the second image extending from an upper side of the second image to down to reach the second height, and controls the area intercepted from the second image to be displayed; wherein, h2 is the second height, h1 is the first height, b is the specific angle, and a is the first preset angle.

9. The head-mounted display device according to claim 7, wherein, the storage further prestores a mapping relationship between a plurality of angles and height, and the processor determines the second height corresponding to the specific angle according to the mapping relationship, and further intercepts the area from the second image extending from an upper side of the second image to down to reach the second height, and controls the area intercepted from the second image to be displayed.

10. The head mounted display device according to any one of claims 1 to 4, wherein, during a process that the movement angle detected by the motion sensor becomes larger, the processor obtains images captured by the camera apparatus at different movement angles, intercepts different areas from different images, and controls the display apparatus to display a splicing area of a currently intercepted area and all previously intercepted areas.

11. A visual aiding method is applied to a head mounted display device, the head mounted display device comprises a display apparatus, a camera apparatus, and a motion sensor, wherein the visual aiding method comprises:
controlling the camera apparatus to turn on to capture image when the motion sensor detects that the head mounted display device moves downward relative to a reference position to reach a first preset angle; and
controlling the display apparatus to display an area of the captured image corresponding to a movement angle according to the movement angle detected by the motion sensor.

12. The method according to claim 11, wherein, the step of "controlling the display apparatus to display an area of the captured image corresponding to a movement angle according to the movement angle detected by the motion sensor" comprises:
controlling the display apparatus to display a larger area of the captured image when the movement angle detected by the motion sensor becomes larger; and
controlling the display apparatus to display a smaller area of the captured image when the movement angle detected by the motion sensor becomes smaller.

13. The method according to claim 12, wherein, the method further comprises:
controlling the display apparatus to display a complete image captured by the camera apparatus when the movement angle detected by the motion sensor is greater than or equal to a second preset angle.

14. The method according to claim 11, wherein, the method further comprises:
controlling to turn off the camera apparatus and/or controlling the display apparatus to stop displaying the image captured by the camera apparatus when the movement angle detected by the motion sensor is less than the first preset angle.

15. The method according to any one of claims 11 to 14, wherein the step of "controlling the display apparatus to display an area of the captured image corresponding to a movement angle according to the movement angle detected by the motion sensor" comprises:
during a process that the movement angle detected by the motion sensor becomes larger or smaller, obtaining images captured by the camera apparatus at different movement angles, and intercepting an area corresponding to the movement angle from the image captured at the current movement angle, and controlling the display apparatus to display the area intercepted from the image.

16. The method according to claim 15, wherein the step of "obtaining images captured by the camera apparatus at different movement angles, and intercepting an area corresponding to the movement angle from the image captured at the current movement angle, and controlling the display apparatus to display the area intercepted from the image", comprises:
obtaining a first image captured by the camera apparatus at the first preset angle, intercepting an area corresponding to the first preset angle from the first image, and controlling the display apparatus to display the area intercepted from the first image; and
obtaining a second image captured by the camera apparatus at a specific angle greater than the first preset angle, and intercepting an area corresponding to the specific angle from the second image, and controlling the display apparatus to display the area intercepted from the second image.

17. The method according to claim 16, wherein, the step "intercepting an area corresponding to the first preset angle from the first image, and controlling the display apparatus to display the area intercepted from the first image" comprises:
determining a first height corresponding to the first preset angle according to the mapping relationship between the first preset angles and the first height;
intercepting an area from the first image extending from an upper side of the first image to down to reach the first height; and
controlling the area intercepted from the first image to be displayed.

18. The method according to claim 17, wherein, the step of "intercepting an area corresponding to the first preset angle from the first image, and controlling the display apparatus to display the area intercepted from the first image" comprises:
calculating a second height corresponding to the specific angle according to a formula h2=h1^{∗}b/a when the head mounted display device moving downward relative to the reference position to the specific angle, wherein, h2 is the second height, h1 is the first height, b is the specific angle, and a is the first preset angle;
intercepting an area from the second image extending from an upper side of the second image to down to reach the second height; and
controlling the area intercepted from the second image to be displayed.

19. The method according to claim 17, wherein, the processor determines the second height corresponding to the specific angle according to a mapping relationship between a plurality of angles and height, and further intercepts the area from the second image extending from an upper side of the second image to down to reach the second height, and controls the area intercepted from the second image to be displayed.

20. The method according to any one of claims 11 to 14, wherein the step of "controlling the display apparatus to display an area of the captured image corresponding to a movement angle according to the movement angle detected by the motion sensor" comprises:
during a process that the movement angle detected by the motion sensor becomes larger, obtaining images captured by the camera apparatus at different movement angles, intercepting different areas from different images, and controlling the display apparatus to display a splicing area of a currently intercepted area and all previously intercepted areas.
